# EUROPÄISCHE PATENTSCHRIFT

(11) **EP 2 517 542 B1**
(45) Veröffentlichungstag und Bekanntmachung des Hinweises auf die Patenterteilung: **26.06.2019**
(21) Anmeldenummer: 12002685.1
(22) Anmeldetag: 18.04.2012
(51) Int. Cl.: A01B 49/02

(54) **Bodenbearbeitungsgerät mit Einebnungsteil**
Soil cultivation device with levelling piece
Appareil de traitement de sol avec pièce de nivellement

(30) Priorität: 30.04.2011 DE 102011100168
(43) Veröffentlichungstag der Anmeldung: 31.10.2012
(73) Patentinhaber: Lemken GmbH & Co. KG, 46519 Alpen (DE)
(72) Erfinder: Maas, Ludger, 47665 Sonsbeck (DE); Happe, Christoph, 46519 Alpen (DE)
(74) Vertreter: Schulte & Schulte

(56) Entgegenhaltungen:
- EP-A1- 0 258 644
- EP-A1- 2 113 159
- DE-A1- 19 747 428
- DE-A1- 19 749 430
- FR-A1- 2 568 088
- GB-A- 1 543 854
- GB-A- 2 043 416
- GB-A- 2 309 622
- GB-A- 2 323 510
- US-A- 5 794 714

## Beschreibung

Die Erfindung betrifft ein Bodenbearbeitungsgerät mit mindestens einer Zinkenreihe mit Zinken gemäß dem Oberbegriff des Patentanspruches 1.

Ein Bodenbearbeitungsgerät mit zwei Zinkenreihen ist zum Beispiel der deutschen Patentschrift DE 3 546 033 C2 zu entnehmen. Der Gegenstand dieses Patentes betrifft ein entsprechendes Bodenbearbeitungsgerät, das mit zwei Reihen von Zinken ausgerüstet ist, mit einer Walze und mit Einebnungsmitteln, die hinter den Zinken und vor der Walze angeordnet sind. Die Zinken hinterlassen Dämme und Rillen. Die Einebnungsmittel bestehen hier aus Hohlscheiben, die in Arbeitsrichtung versetzt zueinander angeordnet sind und mit ihren Hohlflächen nach vorne geneigt so angeordnet sind, dass sie den Boden der Dämme in die Rillen fördern und so für einen eingeebneten Acker sorgen. Die Hohlscheiben erfordern wegen des Versatzes der Hohlscheiben zueinander einen relativ großen Bauraum, was dann nachteilig ist, wenn schwere Walzen oder schwere Doppelwalzen eingesetzt werden. Zum einen wird die Baulänge des Bodenbearbeitungsgerätes relativ groß, zum anderen wird wegen des großen Schwerpunktabstandes in angebauter Version ein schwerer Traktor benötigt, der schwerer ist als vom Zugkraftbedarf her erforderlich. Bekannt sind auch Bodenbearbeitungsgeräte, die anstatt der Hohlscheiben mit einfachen Einebnungszinken als Einebnungsmittel ausgerüstet sind. Dies ermöglicht zwar den Einsatz kleinerer Traktoren, der Einebnungseffekt ist allerdings mangelhaft. Aus der GB 1 543 854 ist ein Bodenbearbeitungsgerät bekannt, bei dem die Einebnungsmittel aus motorisch angetriebenen Werkzeugen bestehen und welche einen variablen Antrieb aufweisen, der in Abhängigkeit von der Arbeitsgeschwindigkeit veränderbar ist. Von Nachteil ist dabei, dass eine exakte Einstellung bzw. Justierung der Einebnungswerkzeuge nicht möglich ist, wodurch ein erhebliches Maß an Effektivität bei der Bodenbearbeitung verloren geht.

Aufgabe der Erfindung ist es, ein kompakt bauendes Bodenbearbeitungsgerät mit einer Zinkenreihe oder mehreren Zinkenreihen zu schaffen, das den Boden möglichst ganzflächig bearbeitet und auch sehr gut einebnet.

Die Aufgabe wird mit den Merkmalen des Patentanspruchs 1 gelöst.

Durch das Vorsehen von motorisch angetriebenen Einebnungswerkzeugen als aktiv angetriebene Einebnungsmittel können auch auf begrenztem Raum effektivere Einebnungswerkzeuge als bisher bekannt eingesetzt werden, so dass es auch zu einer gleichmäßigen Bearbeitung des Bodens kommt.

Die Qualität der Einebnung kann auch dadurch verbessert werden, dass Mittel wie Sensoren und/oder Kameras vorgesehen sind, die den Grad der Einebnung der Einebnungswerkzeuge erfassen und abhängig von den erfassten Daten regelungstechnisch die Einstellung der Einebnungswerkzeuge so verändern, dass ein voreingestellter Sollwertbereich des Grades der Einebnung nicht unterschritten oder nicht überschritten wird. Dadurch, dass Sensoren oder eine Kamera vorgesehen sind, kann der Grad der Einebnung ermittelt, über eine Recheneinheit ausgewertet und über eine oder mehrere Stellvorrichtungen die Intensität gemäß Vorgaben verändert werden. Dabei kann entweder die Frequenz der Bewegung, die Amplitude der Bewegung oder ein Mix daraus verändert werden. Sowohl die Arbeitsgeschwindigkeit und die auftretende Last sind Faktoren, die berücksichtigt werden, als auch die Höhendifferenz des bearbeiteten Bodens zwischen den hinteren Zinken und direkt dahinter. Eine Veränderung des spitzen Winkels in einen spitzeren oder weniger spitzen Winkel ist ein weiterer Einflussfaktor, der Berücksichtigung findet.

Einebnungswerkzeuge, die quer zur Arbeitsrichtung oszillierend ausgebildet sind, können dafür sorgen, dass der höher abgelegte Boden bzw. die Dämme auf direktem Weg in die Rillen bzw. dorthin bewegt wird, wo sich Mulden gebildet haben. Dabei kann die Form und die Aufhängung der Einebnungswerkzeuge den Transport des Bodens dahingehend unterstützen, dass bei einer Bewegung des Einebnungswerkzeuges vom Damm in Richtung der Rille oder Furche viel Boden mitgenommen wird und bei der Rückbewegung von der Furche zum Damm nur wenig oder kein Boden. Dies kann z.B. durch einseitig gewölbte Einebnungswerkzeuge bewirkt werden oder durch ein Ausweichen der Einebnungswerkzeuge bei der Bewegung, in der kein Boden quer transportiert werden soll.

Eine weitere vorteilhafte Ausgestaltung sieht vor, dass der Antrieb der Einebnungswerkzeuge über mindestens einen Hydraulikmotor oder mindestens einen Elektromotor erfolgt. Für die oszillierende Bewegung der Einebnungswerkzeuge, die den gelockerten Boden nur seitlich und nicht gegen die Zugrichtung nach vorne fördern müssen, werden nur geringe Antriebskräfte benötigt. Dafür werden gemäß der Erfindung bevorzugt Hydraulikmotoren und Elektromotoren eingesetzt.

Ein weiterer Vorschlag sieht vor, dass der Antrieb variabel ausgebildet ist und in Abhängigkeit von der Beschaffenheit des Bodens und/oder der Arbeitsgeschwindigkeit über eine Regeleinrichtung veränderbar ist. Der variabel einstellbare Antrieb und damit die variabel vorgebbare Arbeitsintensität, die über eine Regeleinrichtung oder über eine andere fernbedienbare Stelleinrichtung beeinflussbar ist, ermöglicht eine angepasste Zerkleinerung und Einebnung des durch die Bodenbearbeitungswerkzeuge abgeschälten und gelockerten Bodens. Der Grad der Einebnung kann vom Traktorfahrer verändert werden. Die Regeleinrichtung kann z.B. Bestandteil des Bodenbearbeitungsgerätes aber auch Bestandteil des Traktors sein.

Die Einebnung kann außerdem dadurch verbessert werden, dass hinter den oszillierenden Einebnungswerkzeugen und vor der Walze ein den Boden aufstauendes Stauwerkzeug angeordnet ist. Dieses Werkzeug staut etwas Erdreich auf und verbessert schon so die Einebnungswirkung. Hinzu kommt die oszillierende Bewegung der Einebnungswerkzeuge, die ein Fließen und Verteilen des Bodens begünstigen. Der Zugwiderstand wird so trotz der Stauwirkung durch das Stauwerkzeug nur unwesentlich erhöht.

Es ist in einer Ausgestaltungsform vorgesehen, dass das den Boden aufstauende Stauwerkzeug als Schneid- oder Schleppschiene ausgebildet ist. Je nach Bodenbeschaffenheit und Einebnungsbedarf kann der Boden mehr oder weniger aufgestaut werden. Als Schneidschiene steht das Stauwerkzeug z.B. in Arbeitsrichtung in einem stumpfen Winkel zum Boden und schält den gelockerten Boden etwas ab und führt ihn den motorisch angetriebenen Einebnungswerkzeugen zu. Als Schleppschiene steht das Stauwerkzeug z.B. in Arbeitsrichtung in einem spitzen Winkel zum Boden. Der gelockerte Boden wird mehr oder weniger abgeschabt bzw. abgeschleppt und nur zum geringen Teil aufgestaut und den Einebnungswerkzeugen zugeführt. Je nach Winkelstellung des Stauwerkzeuges oder der Stauwerkzeuge zum Boden, stumpf, steil oder 90 °, wird mehr oder weniger Boden den Einebnungswerkzeugen zugeführt.

Nach einer weiteren vorteilhaften Ausführungsform der Erfindung ist daran gedacht, dass die Schneid- oder Schleppschiene quer zur Arbeitsrichtung oszillierend bewegbar ausgebildet ist. Der Antrieb für diese oszillierende Bewegung kann durch ein Bodenrad erfolgen, aber auch durch einen oder mehrere Hydraulikmotoren oder Elektromotoren. Denkbar ist auch, das Stauwerkzeug so auszubilden, dass es auch die Funktion der Einebnungswerkzeuge ausführen kann.

Eine weitere Ausgestaltung der Erfindung sieht vor, dass die Einebnungswerkzeuge in Arbeitsrichtung einen spitzen Winkel (a) zur Bodenoberfläche einschließend und bei Überlastung nachgebend ausgebildet sind. Diese Ausgestaltung der Einebnungswerkzeuge ermöglicht es, dass der Boden zum Teil in Arbeitsrichtung nach vorne und nach unten gedrückt wird und so auch verstärkt gekrümelt wird, aber bei Überlastung oder bei Bodenhindernissen einfach nach oben ausweichen kann.

In Hinblick auf die Einebnungswerkzeuge ist es sinnvoll, wenn diese als striegelförmige elastische Eggenzinken ausgebildet sind oder elastisch nachgebbar mit einem Zinkenträger oder mehreren Zinkenträgern verbunden sind. Die Einebnungswerkzeuge können so auf einfache Weise leicht und kompakt ausgebildet sein und durch den elastischen Aufbau auch vor Überlastung geschützt angeordnet werden. Die Striegelzinken können aus vergütetem Stahl hergestellt sein, abgefedert angeordnet sein oder auch z.B. aus einem verschleißfestem Kunststoff hergestellt sein.

Der Optimierung der Einebnung dient es auch, wenn mindestens zwei quer zur Arbeitsrichtung angeordnete Zinkenträger vorgesehen sind, die gegenläufig und quer zur Arbeitsrichtung oszillierend bewegbar ausgebildet sind. Durch das Vorsehen von zwei oder mehr quer zur Arbeitsrichtung angeordneten Zinkenträgern mit Zinken wird eine verbesserte Einebnung erzielt. Die gegenläufige Bewegung sorgt für einen guten Schwingungsausgleich der Einebnungswerkzeuge, der insbesondere bei einer großen Bearbeitungsintensität der Einebnungswerkzeuge unverzichtbar ist.

Weitere Einzelheiten der Erfindung sind den Figuren und der Figurenbeschreibung zu entnehmen. Es zeigen:
- Figur 1: das Bodenbearbeitungsgerät mit Einebnungswerkzeugen in Seitenansicht,
- Figur 2: das Bodenbearbeitungsgerät mit Einebnungswerkzeugen und Stauwerkzeug in Seitenansicht und
- Figur 3: eine perspektivische Draufsicht des Bodenbearbeitungsgerätes.

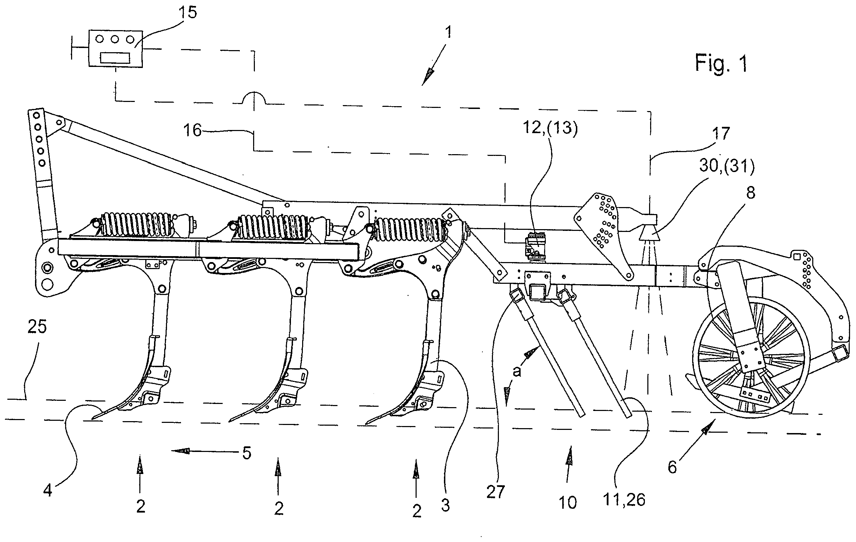

Figur 1 zeigt das Bodenbearbeitungsgerät 1 mit den Einebnungswerkzeugen 11 in Seitenansicht. Das Bodenbearbeitungsgerät 1 weist hier drei Zinkenreihen 2 mit Zinken 3 auf. Die Zinken 3 sind mit Bodenbearbeitungswerkzeugen 4 ausgerüstet. In Arbeitsrichtung 5 gesehen sind die Einebnungsmittel 10 hinter den Zinken 3 und vor der Walze 6 angeordnet. Die Walze 6 besteht hier nur aus einem Walzenkörper 8. Abhängig vom gewünschten Arbeitseffekt können auch Walzen mit mehreren Walzenkörpern, z.B. sogenannte Doppelwalzen eingesetzt werden. Die Einebnungsmittel 10 sind als quer zur Arbeitsrichtung 5 oszillierend angetriebene Einebnungswerkzeuge 11 ausgebildet. Die Einebnungswerkzeuge 11 gemäß Figur 1 sind als Eggenzinken 26 ausgebildet, die vorzugsweise elastisch nachgebbar mit den Zinkenträgern 27 verbunden sind. Die Zinkenträger 27 mit den Einebnungswerkzeugen 11 bzw. Eggenzinken 26 werden über den Hydraulikmotor 12 oszillierend quer zur Arbeitsrichtung angetrieben. Die Erfindung sieht auch vor, dass anstatt eines Hydraulikmotors ein Elektromotor 13 eingesetzt werden kann. Der Grad der Einebnung der Einebnungsmittel 10 wird über Sensoren 30 und/oder Kameras 31 erfasst und z.B. durch einen Jobrechner ausgewertet und dann über die Regeleinrichtung 15 optimiert. Die Regeleinrichtung 15 verändert dann die Antriebsgeschwindigkeit des Hydraulikmotors 12 und/oder des Elektromotors 13. Zusätzlich kann sowohl die Arbeitstiefe der Einebnungswerkzeuge 11 entsprechend verändert werden als auch der Winkel (a) der Einebnungswerkzeuge 11 bzw. Eggenzinken 26 zur Bodenoberfläche 25. Regeltechnisch sind die Hydraulikmotoren 12 bzw. Elektromotoren 13 und/oder die Sensoren 30 bzw. die Kameras 31 über die Leitungen 16 und 17 mit der Regeleinrichtung verbunden. Unabhängig von der Energieversorgung der Hydraulikmotoren 12, Elektromotoren 13, Sensoren 30 und Kameras 31 kann die Datenübertragung auch drahtlos erfolgen, z.B. per Funk oder Bluetooth.

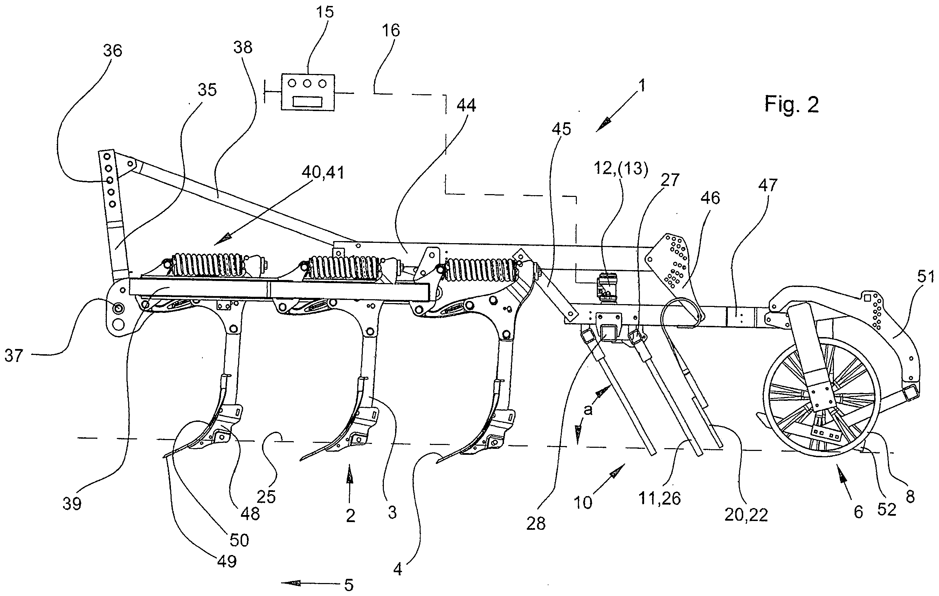

Das Bodenbearbeitungsgerät 1 mit den Einebnungswerkzeugen 11 und einem Stauwerkzeug 20 in der Seitenansicht zeigt Figur 2. Das Bodenbearbeitungsgerät 1 weist vorne den Dreipunktturm 35 mit den Anbaupunkten 36 und 37 für die Verbindung mit dem Dreipunktgestäng eines Traktors auf. Der Dreipunktturm 35 ist direkt und über die Streben 38 mit dem Rahmen 39 verbunden. Das dargestellte Bodenbearbeitungsgerät 1 weist drei Zinkenreihen 2 mit Zinken 3 auf. Die Zinken tragen die Bodenbearbeitungswerkzeuge 4, die hier jeweils aus einer Scharspitze 49 und einem Leitblech 50 bestehen. Sowohl die Scharspitze 49 als auch das Leitblech 50 sind mit einem Scharfuß 48 verbunden, der wiederum über ein Schnellwechselsystem mit dem Zinken 3 verbunden ist. Der jeweilige Zinken 3 mit seinen Bodenbearbeitungswerkzeugen 4 ist gegen Überlastung geschützt. Dazu dienen Überlastsicherungen 40 mit Druckfedern 41. Über die Träger 44 werden die Einebnungsmittel 10 und die Walze 6 mit dem Rahmen 39 des Bodenbearbeitungsgerätes 1 verbunden. Die Walze 6 besteht hier aus einem Walzenkörper 8, Abstreifern 52 und einem Abstreiferrahmen 51. Die Verbindung der Einebnungsmittel 10 und der Walze 6 mit den Trägern 44 erfolgt mittelbar über die Zwischenträger 48, die Lenker 45 und die Stelllenker 46. Die Einebnungsmittel 10 bestehen hier aus einem Querrahmen 28, an dem quer zur Arbeitsrichtung 5 Zinkenträger 27 oszillierend angelenkt sind. Die Zinkenträger 27 nehmen die Einebnungswerkzeuge 11 bzw. die Eggenzinken 26 auf. Der Antrieb zur Erzeugung der oszillierenden Bewegung erfolgt über Hydraulikmotoren 12 oder Elektromotoren 13, die über Leitungen 16 mit einer Regeleinrichtung 15 verbunden sind. Die Einebnungswerkzeuge 11 sind im Winkel (a) zur Bodenoberfläche 26 angeordnet. Um den Einebnungseffekt der Einebnungsmittel 10 zu verbessern, ist hinter den Einebnungswerkzeugen 11 ein Stauwerkzeug 20 angeordnet, in diesem Fall eine Schleppschiene 22. Die Schleppschiene 22 staut Erdreich auf, das durch die oszillierenden Einebnungswerkzeuge bewegt und verteilt wird und so die Dämme und Furchen bzw. Rillen einebnet.

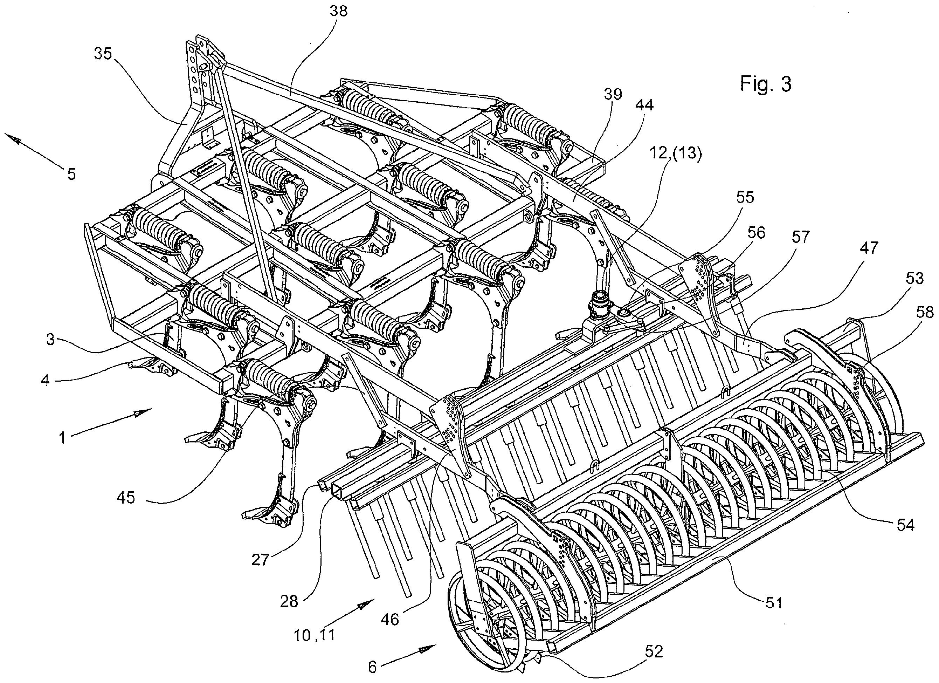

Figur 3 zeigt eine perspektivische Draufsicht des Bodenbearbeitungsgerätes 1. Über den Dreipunktturm 35 wird das Bodenbearbeitungsgerät 1 mit dem Dreipunktgestänge eines Traktors verbunden. Über die Streben 38 wird der Dreipunktturm 35 zum Rahmen 39 abgestützt. Der Rahmen 39 nimmt auch die Träger 44 auf, die über die Lenker 45 und die Stelllenker 46 mit den Zwischenträgern 47 verbunden sind. An den Zwischenträgern 47 ist der Querrahmen 28 der Einebnungsmittel 10 mit den Einebnungswerkzeugen 11 verbunden. Der Querrahmen 28 weist aufrechte Achsen 55 auf, die die Pendelträger 56 aufnehmen. Die Pendelträger 56 tragen sowohl vordem Querrahmen 28 als auch dahinter jeweils einen Zinkenträger 27. An diesen Zinkenträgern 27 sind die Einebnungswerkzeuge 11 bzw. Eggenzinken 26 befestigt, wie schon zuvor erwähnt. Auf dem Querrahmen 28 findet sich der Hydraulikmotor 12, der über den Verbindungslenker 57 die Zinkenträger 27 mit den Einebnungswerkzeugen 11 bzw. Eggenzinken 26 quer zur Arbeitsrichtung 5 oszillierend antreibt. Anstelle des Hydraulikmotors 12 kann auch ein Elektromotor 13 eingesetzt werden. Endseitig an den Zwischenträgern 47 ist die Walze 6 angeordnet, über die das Bodenbearbeitungsgerät 1 in der Arbeitstiefe geführt wird. Die Walze 6 weist mehrere Ringelemente 54 auf, die drehbar mit dem Walzenrahmen 53 verbunden sind. Die Abstreifer 52 sorgen dafür, dass sich zwischen den Ringelementen 54 kein Erdreich festsetzen kann. Die einzelnen Abstreifer 52 sind einem Abstreiferrahmen 51 zugeordnet, der die Stelleinrichtung 58 aufweist. Über die Stelleinrichtung 58 können die Abstreifer 51 praktisch zentral in ihrer Stellung zu den Ringelementen 54 und dem Boden eingestellt werden, während über die Stelllenker 46 die Arbeitstiefe der Zinken 3 mit den Bodenbearbeitungswerkzeugen 4 verändert werden kann. Die Einebnungsmittel 10 sind hier, wie bereits erwähnt, fest über den Querrahmen 28 mit den Zwischenträgern 47 verbunden. Denkbar ist auch, dass die Arbeitstiefe der Einebnungsmittel 10 bzw. der Einebnungswerkzeuge 11 in Bezug auf die Zinken 3 und die Walze 6 veränderbar ist wie auch der Winkel (a) der Einebnungswerkzeuge 11. Die dafür erforderlichen Stellorgane können ebenfalls hydraulisch oder elektrisch betätigbar ausgebildet und über die Regeleinrichtung 15 in ihrer Einstellung optimierbar sein.

## Patentansprüche

1. Bodenbearbeitungsgerät (1) mit mindestens einer Zinkenreihe (2) mit Zinken (3), die mit Bodenbearbeitungswerkzeugen (4) ausgerüstet sind und mit einer in Arbeitsrichtung (5) hinter den Bodenbearbeitungswerkzeugen (4) angeordneten Walze (6), wobei Einebnungsmittel (10) vorgesehen sind, die hinter den Bodenbearbeitungswerkzeugen (4) und vor der Walze (6) angeordnet sind, **wobei**
die Einebnungsmittel (10) aus motorisch angetriebenen Einebnungswerkzeugen (11) bestehen, die eine Querverteilung des von den Bodenbearbeitungswerkzeugen (4) gelockerten Bodens bewirkend ausgebildet sind, und zwar derart, dass höher gelegener Boden in die von den Bodenbearbeitungswerkzeugen (4) hinterlassenen Furchen gefördert wird, **dadurch gekennzeichnet,**
**dass** Mittel wie Sensoren (30) und/oder Kameras (31) vorgesehen sind, die den Grad der Einebnung der Einebnungswerkzeuge (11) erfassen und abhängig von den erfassten Daten regelungstechnisch über eine Regeleinrichtung (15) die Einstellung der Einebnungswerkzeuge (11) so verändern, dass ein voreingestellter Sollwertbereich des Grades der Einebnung nicht unterschritten oder nicht überschritten wird.

2. Bodenbearbeitungsgerät nach Anspruch 1,
**dadurch gekennzeichnet,**
**dass** die Einebnungswerkzeuge (11) quer zur Arbeitsrichtung (5) oszillierend ausgebildet sind.

3. Bodenbearbeitungsgerät nach Anspruch 1,
**dadurch gekennzeichnet,**
**dass** der Antrieb der Einebnungswerkzeuge (11) über mindestens einen Hydraulikmotor (12) oder mindestens einen Elektromotor (13) erfolgt.

4. Bodenbearbeitungsgerät nach Anspruch 1 oder 3,
**dadurch gekennzeichnet,**
**dass** der Antrieb variabel ausgebildet ist und in Abhängigkeit von der Beschaffenheit des Bodens und/oder der Arbeitsgeschwindigkeit über eine Regeleinrichtung (15) veränderbar ist.

5. Bodenbearbeitungsgerät nach Anspruch 1,
**dadurch gekennzeichnet,**
**dass** hinter den oszillierenden Einebnungswerkzeugen (11) und vor der Walze (6) ein den Boden aufstauendes Stauwerkzeug (20) angeordnet ist.

6. Bodenbearbeitungsgerät nach Anspruch 5,
**dadurch gekennzeichnet,**
**dass** das den Boden aufstauende Stauwerkzeug (20) als Schneid- oder Schleppschiene (22) ausgebildet ist.

7. Bodenbearbeitungsgerät nach Anspruch 6,
**dadurch gekennzeichnet,**
**dass** die Schneid- oder Schleppschiene (22) quer zur Arbeitsrichtung (5) oszillierend bewegbar ausgebildet ist.

8. Bodenbearbeitungsgerät nach Anspruch 1,
**dadurch gekennzeichnet,**
**dass** die Einebnungswerkzeuge (11) in Arbeitsrichtung (5) einen spitzen Winkel (a) zur Bodenoberfläche (25) einschließend und bei Überlastung nachgebend ausgebildet sind.

9. Bodenbearbeitungsgerät nach Anspruch 1,
**dadurch gekennzeichnet,**
**dass** die Einebnungswerkzeuge (11) als striegelförmige elastische Eggenzinken (26) ausgebildet sind oder elastisch nachgebbar mit einem Zinkenträger (27) oder mehreren Zinkenträgern (27) verbunden sind.

10. Bodenbearbeitungsgerät nach Anspruch 9,
**dadurch gekennzeichnet,**
**dass** mindestens zwei quer zur Arbeitrichtung (5) angeordnete Zinkenträger (27) vorgesehen sind, die gegenläufig und quer zur Arbeitsrichtung (5) oszillierend bewegbar ausgebildet sind.

## Claims

1. Soil working implement (1) having at least one row of tines (2), the tines (3) are equipped with soil working tools (4), and a roller (6) being arranged behind the soil working tools (4) in the working direction (5), levelling means (10) being provided which are arranged behind the soil working tools (4) and in front of the roller (6), wherein the levelling means (10) consist of motor-driven levelling tools (11) which are designed to effect a transverse distribution of the soil loosened by the soil working tools (4), in such a way that higher-lying soil is conveyed into the furrows left behind by the soil working tools (4),
**characterized in that**
means such as sensors (30) and/or cameras (31) are provided, which detect the degree of levelling of the levelling tools (11) and change the setting of the levelling tools (11) via a control device (15) as a function of the detected data in terms of control such that a preset range of the degree of levelling is not dropped or not exceeded.

2. Soil working implement in accordance with claim 1,
**characterized in that**
the levelling tools (11) are designed to oscillate transversely to the working direction (5).

3. Soil working implement according to claim 1,
**characterized in that**
the levelling tools (11) are driven via at least one hydraulic motor (12) or at least one electric motor (13).

4. Soil working implement according to claim 1 or 3,
**characterized in that**
the drive is of variable design and can be varied via a regulating device (15) as a function of the condition of the soil and/or the working speed.

5. Soil working implement according to claim 1,
**characterized in that**
behind the oscillating levelling tools (11) and in front of the roller (6) a stowing tool (20) is arranged to stow the ground.

6. Soil working implement according to claim 5,
**characterized in that**
the stowing tool (20) accumulating the ground is designed as a cutting or trailing bar (22).

7. Soil working implement according to claim 6,
**characterized in that**
the cutting or trailing bar (22) is designed to be oscillatingly movable transversely to the working direction (5).

8. Soil working implement according to claim 1,
**characterized in that**
the levelling tools (11) are designed to enclose an acute angle (a) to the ground surface (25) in the working direction (5) and to pass in the event of overloading.

9. Soil working implement according to claim 1,
**characterized in that**
the levelling tools (11) are in the form of strut-shaped elastic harrow tines (26) or are elastically adjustably connected to a tine carrier (27) or a plurality of tine carriers (27).

10. Soil working implement according to claim 9,
**characterized in that**
at least two tine carriers (27) which are arranged transversely with respect to the working direction (5) and which are designed to be oscillatingly movable in opposite directions and transversely with respect to the working direction (5) are provided.

## Revendications

1. Outil de travail du sol (1) avec au moins une rangée de dents (2), les dents (3) équipées d'outils de travail du sol (4) et avec un rouleau (6) disposé derrière les outils de travail du sol (4) dans la direction de travail (5), des moyens de nivellement (10) étant prévus qui sont disposés derrière les outils de travail du sol (4) et devant le rouleau (6), dans lequel les moyens de nivellement (10) sont constitués d'outils de nivellement motorisés (11) qui sont conçus pour effectuer une répartition transversale du sol ameubli par les outils de travail du sol (4), de telle sorte que le sol plus élevé est transporté dans les sillons laissés par les outils de travail du sol (4),
**caractérise en ce qu'**il
est prévu des moyens tels que des capteurs (30) et/ou des caméras (31) qui détectent le degré de mise à niveau des outils de nivellement (11) et modifient le réglage des outils de nivellement (11) via un dispositif de commande (15) en fonction des données détectées en matière de commande de telle sorte qu'une plage de consigne prédéterminée du degré de mise à niveau ne soit ni inférieure ni supérieure.

2. Outil de travail du sol selon la revendication 1,
**caractérise en ce que**
les outils de nivellement (11) sont conçus pour osciller transversalement à la direction de travail (5).

3. Outil de travail du sol selon la revendication 1,
**caractérise en ce que**
les outils de nivellement (11) sont entraînés par au moins un moteur hydraulique (12) ou au moins un moteur électrique (13).

4. Outil de travail du sol selon la revendication 1 ou 3,
**caractérise en ce que**
l'entraînement est de construction variable et peut être modifié par un dispositif de régulation (15) en fonction de l'état du sol et/ou de la vitesse de travail.

5. Outil de travail du sol selon la revendication 1,
**caractérise en ce que**
derrière les outils de nivellement oscillants (11) et devant le rouleau (6) est disposé un outil de retenue (20) qui range le sol.

6. Outil de travail du sol selon la revendication 5,
**caractérise en ce que**
l'outil de retenue (20) accumulant le sol est conçu sous la forme d'un rail de coupe ou de guidage (22).

7. Outil de travail du sol selon la revendication 6,
**caractérise en ce que**
le rail de coupe ou de guidage (22) est conçu pour être mobile de manière oscillante transversalement à la direction de travail (5).

8. Outil de préparation du sol selon la revendication 1,
**caractérise en ce que**
les outils de nivellement (11) sont conçus pour délimiter un angle aigu (a) par rapport à la surface du sol (25) dans la direction de travail (5) et pour céder en cas de surcharge.

9. Outil de préparation du sol selon la revendication 1,
**caractérise en ce que**
**en ce que** les outils de nivellement (11) se présentent sous la forme de dents de recouvreur (26) élastiques en forme de jambes de force ou sont reliés élastiquement de manière réglable à un porte-dents (27) ou plusieurs porte-dents (27).

10. Outil de travail du sol selon la revendication 9,
**caractérise en ce qu'**il
est prévu au moins deux porte-dents (27) qui sont disposés transversalement par rapport à la direction de travail (5) et qui sont conçus pour être mobiles en oscillation dans des directions opposées et transversalement par rapport à la direction de travail (5).
